# EUROPEAN PATENT SPECIFICATION

(11) **EP 0 715 939 B1**
(45) Date of publication and mention of the grant of the patent: **21.04.1999**
(21) Application number: 95110037.9
(22) Date of filing: 28.06.1995
(51) Int. Cl.: B29C 45/26

(54) **Disk injection molding device having dog-clutch opening guide means**
Plattenspritzgiessvorrichtung mit Öffnungsführungsmitteln mit Klauenkupplung
Dispositif de moulage par injection pour disques avec moyens de guidage d'ouverture à accouplement à crabot

(30) Priority: 09.12.1994 JP 331776/94
(43) Date of publication of application: 12.06.1996
(73) Proprietor: SEIKOH GIKEN Co., Ltd., Matsudo-shi, Chiba-ken (JP)
(72) Inventor: Takahashi, Mitsuo, Matsudo-shi, Chiba-ken (JP); Yasuda, Katsuyuki, Chiba-ken (JP)
(74) Representative: Hosbach, Hans Ulrich, Dipl.-Ing.

(56) References cited:
- EP-A- 0 247 244
- US-A- 5 388 982
- PATENT ABSTRACTS OF JAPAN vol. 9, no. 194 (M-403) [1917] , 10 August 1985 & JP-A-60 058813 (HITACHI SEISAKUSHO KK), 5 April 1985,
- PATENT ABSTRACTS OF JAPAN vol. 16, no. 561 (M-1341), 3 December 1992 & JP-A-04 216025 (TOSHIBA MACH CO LTD), 6 August 1992,

## Description

### BACKGROUND OF THE INVENTION

### 1. Field of the Invention

The present invention relates to a disk injection molding device having a dog-clutch opening guide means for preventing the shaft center displacement caused in die opening between fixed and movable disk cavity dies of an injection molding die for optical disks and the like, and more particularly, to a disk injection molding device having a dog-clutch opening guide means capable of preventing bits transferred onto the surface of a molded optical disk from being damaged by the shaft center displacement between fixed and movable disk cavity dies which is caused in die opening after completion of injection molding.

### 2. Description of the Related Art

A well-known type of disk injection molding device for molding magneto-optical disks by injection is provided with fixed and movable die bases, cylindrical disk cavity dies located in the center of the respective die bases, and a pair of cylindrical guide rings functioning as aligning guide means for the disk cavity dies, which respectively are concentrically located on the outer periphery of the respective disk cavity dies and provided with male and female taper-engaging surfaces in a shaft hole connecting portion at the leading end thereof to be engaged with each other.

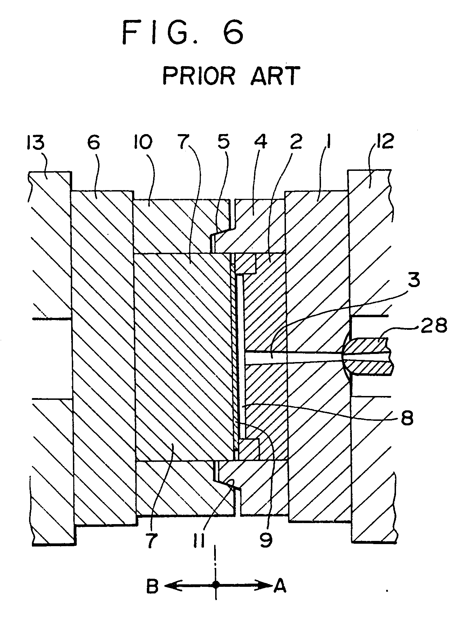

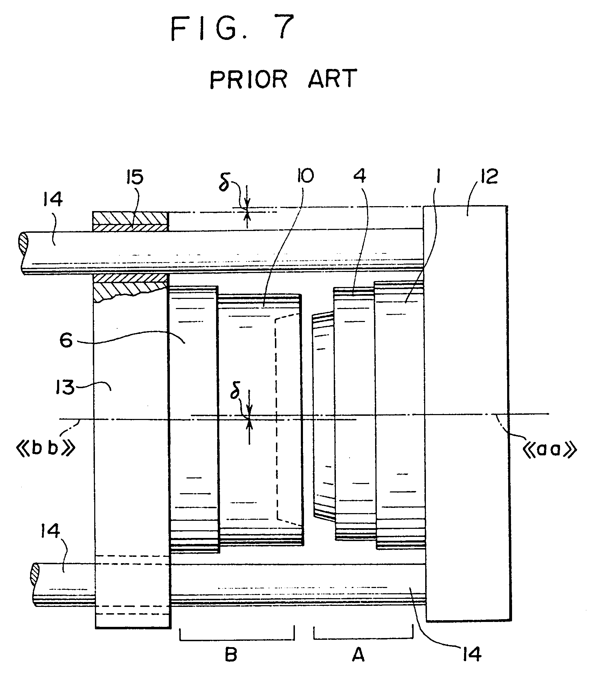

Fig. 6 is a front sectional view showing a conventional disk injection molding device in a die clamping state, and Fig. 7 shows the molding device in a die opening state to explain problems thereof. In Figs. 6 and 7, A and B respectively denote a fixed die assembly and a movable die assembly.

A fixed disk cavity die 2 is fixed to a fixed die base 1 in the fixed die assembly A, and provided with an injection nozzle 3 for molten resin material in the center thereof. A fixed guide ring 4 having a cylindrical shape is fixed integrally to the periphery of the fixed die base 1, and provided with a male tapered surface 5 with a 3 to 5 degree slope at the left end thereof. Resin is supplied from a nozzle 28 of an injection molding machine into the center hole of the fixed die base 1 in injection molding.

A movable disk cavity die 7 is fixed to a movable die base 6 in the movable die assembly B, thereby forming a cavity 8 between the fixed disk cavity die 2 and the movable disk cavity die 7 to be charged with molten resin material. A stamper plate 9 made of pure nickel has fine signal bits engraved on the surface (the right side in the figure) thereof, and is fixed to the surface of the movable disk cavity die 7 by an unillustrated attachment member. A cylindrical movable guide ring 10 is integrally fixed onto the outer periphery of the movable die base 6 or the movable disk cavity die 7, and provided with a female tapered surface 11, which is to be precisely engaged with the male tapered surface 5 in the fixed die assembly A, at the right end thereof.

The above die assemblies A and B are respectively mounted to fixed and movable platens 12 and 13 of the injection molding machine.

In the die clamping state shown in Fig. 6, molten resin material is charged from the injection nozzle 28 into the cavity 8 formed by the cavity dies 2 and 7 under high pressure, by which the fine signal bits of the stamper plate 9 are transferred onto the surface of a resin molded piece. Following the molding, die opening is performed by moving the movable platen 13 backward, and then, the whole resin molded piece is taken out of the cavity dies 2 and 7.

In the optical disk injection molding machine shown in Fig. 7 in which the movable platen 13 moves horizontally, the movable platen 13 is held by four guide rods 14 and driven by pressurized power of an unillustrated toggle mechanism or hydraulic piston. In this case, clearances formed between bearings 15 of the movable platen 13 and the guide rods 14 and a downward deflection amount δ of the guide rods 14, resulting from the weight of the movable platen 13 and the movable die assembly B, gradually deflect and shift, by the deflection amount δ, the shaft center of the movable die assembly B, which is aligned with the shaft center of the fixed die assembly A by the above-mentioned taper guide mechanism in the die clamping state, from the shaft center of the fixed die assembly A during the die opening process. The deflection amount δ of an injection molding machine having a die clamping force of more than 75 tons normally measures 50µm to 70µm.

In high-speed molding of optical disks, since die opening is performed in a state in which the inside of a resin molded piece is partially melted and the surface thereof is not hardened completely, the shaft center displacement between the fixed and movable dies A and B requires to be kept zero until the die stroke reaches at least 200µm. If not, for example, fine signal bits transferred on the resin molded piece are deformed or double-transferred. If the taper angle of each guide ring is, for example, five degrees, the deflection amount δ may reach 17.5µm when the die stroke is 200µm. To the contrary, in the die clamping process, the total weight of the movable platen 13 and the movable die assembly B coming to 300kgf to 500kgf is placed like an impact load on the bottom of each taper guide surface in every molding cycle, and therefore, the bottom taper surface is liable to be abnormally worn out and galled. In order to prevent the mixing of impurities into the cavity 8 in the optical disk molding device, the use of lubricant requires to be avoided. For that purpose, hardening, molybdenum disulfide coating and the like are applied to each taper surface.

The deformation and double transfer of signal bits in die opening and the wear and galling of engaging surfaces in die clamping all result from the displacement of the shaft centers of dies.

### SUMMARY OF THE INVENTION

An object of the present invention is to provide a disk injection molding device having a dog-clutch opening guide means which can prevent the displacement between fixed and movable disk cavity dies in die opening.

In order to achieve the above object, there is provided a disk injection molding device with a dog-clutch die opening guide means for moving dies horizontally, having fixed and movable die bases, cylindrical disk cavity dies mounted in the center of the respective bases, and a pair of cylindrical guide rings concentrically located, as aligning guide means for the disk cavity dies, on the outer periphery of the disk cavity dies and having male and female taper engaging surfaces in a shaft hole connecting portion at the leading ends thereof, which disk injection molding device comprising a plurality of grooves formed in the axial direction to pierce between the inner periphery and the outer periphery from the leading end of the taper-engaging surface on the outside cylindrical surface of one of the guide rings, and a plurality of guide blocks made of hard material to protrude from the leading end of the other guide ring and be slidably and precisely engaged with the plurality of parallel grooves of the one guide ring, wherein the cavity dies are concentrically held by a dog-clutch slidable coupling between the guide blocks and the grooves.

More than three grooves may be formed on the guide ring outside cylindrical surface at regular intervals.

The guide blocks may be structured by fixing guide blocks made of wear-resistant material, such as cemented carbide, into grooves on the other guide ring corresponding to the plurality of grooves of the one guide ring to protrude from the leading end surface of the other guide ring.

A plate member made of wear-resistant material, such as cemented carbide, may be fixed onto both surfaces of each groove to be engaged with the surfaces of each block or all over the groove.

A material used for the guide grooves and the guide blocks may be a cemented carbide having a rockwell hardness HR of A83 to 89 and a transverse bending force of 200kgf/mm².

### BRIEF DESCRIPTION OF THE DRAWINGS

Fig. 1 is a side view showing a fixed guide ring in a disk injection molding device having a dog-clutch opening guide means according to an embodiment of the present invention;
Fig. 2 is a front view of the fixed guide ring;
Fig. 3 is a front view showing a movable guide ring of the disk injection molding device;
Fig. 4 is a side view of the movable guide ring;
Fig. 5 is a schematic view showing the operation of the disk injection molding device;
Fig. 6 is a sectional view showing a conventional molding device in a die clamping state; and
Fig. 7 is a view showing the conventional molding device in a die open state to explain problems thereof.

### DESCRIPTION OF THE PREFERRED EMBODIMENT

The present invention will now be described in more detail with reference to the attached drawings.

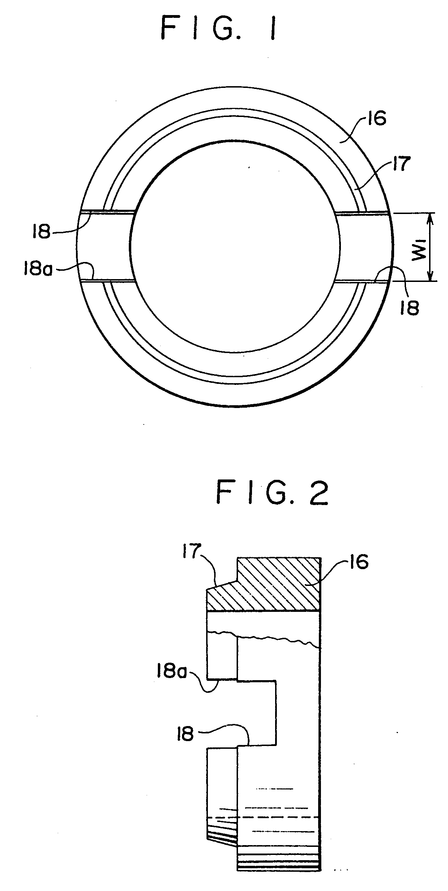

Fig. 1 is a side view of a fixed guide ring used in a disk injection molding device having a dog-clutch opening guide means according to an embodiment of the present invention, and Fig. 2 is a partially cutaway front view of the fixed guide ring.

Referring to Fig. 2, a male tapered surface 17 with a 5-degree slope is formed at the left end of a fixed guide ring 16. The slope is exaggerated for easy illustration and understanding. As shown in Fig. 1, a pair of precisely worked grooves 18 having a width W₁ elongate on the left and right sides of the leading end surface of the fixed guide ring 16. An entrance 18a of each groove 18 is a little wider than the above-mentioned width W₁.

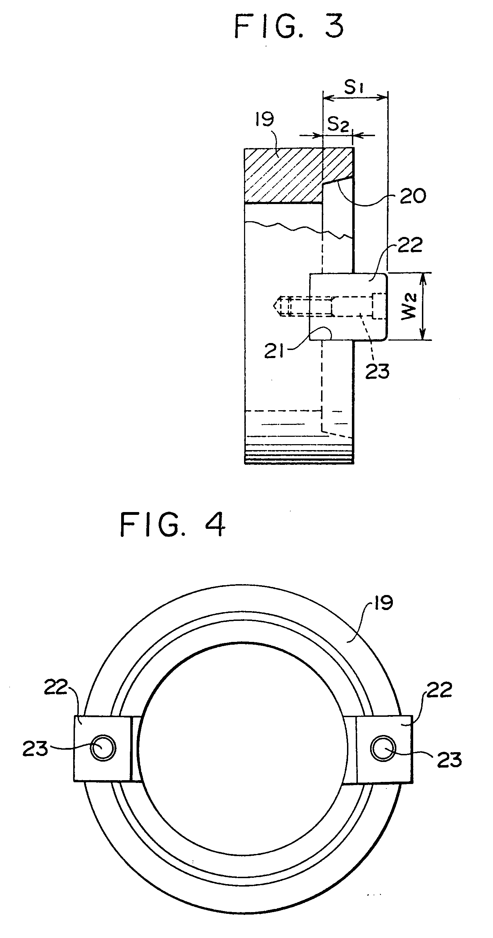

Fig. 3 is a partially cutaway front view of a movable guide ring of the molding device according to the embodiment of the present invention, and Fig. 4 is a side view of the movable guide ring.

As shown in Fig. 3, a cylindrical movable guide ring 19 has a female tapered surface 20, which has the same taper angle as the male tapered surface of the fixed guide ring 16, on the periphery at the right end thereof, and a pair of precisely worked parallel grooves 21 having the width W₁ are formed on the right and left sides of the outside cylindrical surface thereof corresponding to the grooves 18 of the fixed guide ring 16. Into the parallel grooves 21, guide blocks 22 made of cemented carbide and having a width W₂ and a height, that is, a projection length (S₁-S₂) from the surface of the movable guide ring 19 are respectively fixed by check bolts.

The fixed and movable guide rings 16 and 19 are respectively fixed to the same fixed and movable die bases as shown in Figs. 6 and 7 by unillustrated check bolts.

Since upper and lower surfaces of each precise parallel groove 18 of the fixed guide ring 16 and upper and lower surfaces of each guide block 22 of the movable guide ring 19 are not engaged with each other through tapered surfaces, all the contact surfaces therebetween are pressurized slide frictional surfaces.

As mentioned above, since any kind of lubricant cannot be used in the optical disk injection molding die, the selection of material of each component is important to secure durability and stability. In this embodiment, the guide blocks 22 are made of a cemented carbide having a rockwell hardness HR of A83 to 89 and a transverse bending force of 200kgf/mm². The material of the fixed and movable guide rings 16 and 19 is a martensitic stainless steel, such as SUS420 and SUS440, which is treated with heat and hardened to achieve HR C52 to 60. Wear-resistant surface treatment, for example, molybdenum disulfide coating, is applied to the fixed guide ring 16. The wear resistance can be further enhanced by fixing rectangular plates made of wear-resistant material, such as cemented carbide, by check bolts onto the upper and lower surfaces of the precisely worked parallel grooves 18 of the fixed guide ring 16 which are to be contacted with the upper and lower surfaces of the cemented carbide guide blocks 22, or all over the parallel grooves 18.

Die production is required to be done so precisely that the engagement clearance between the width W₁ of the precisely worked parallel grooves 18 of the fixed guide ring 16 and the width W₂ of the guide blocks 22 of the movable guide ring 19 is less than 3µm at room temperature.

An engagement length S₁ of each guide block 22 and each precise parallel groove 18 of the fixed guide ring 16 is set at least 5mm longer than a length S₂ of the tapered portion, by which the guide block 22 engages with the precisely worked parallel groove 18, 5mm ahead of the tapered guide surfaces.

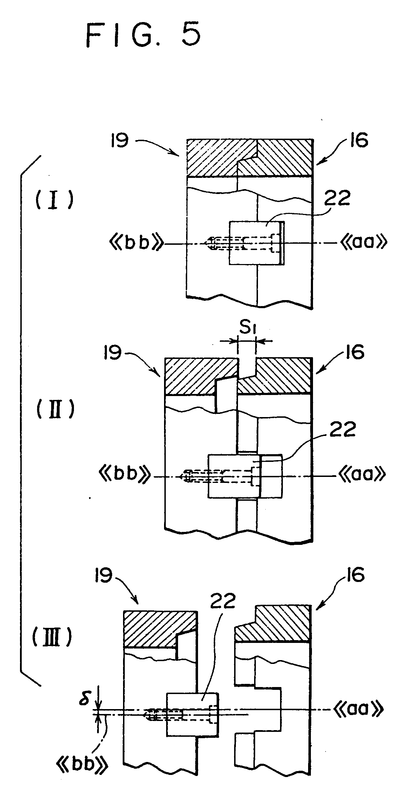

Fig. 5 is a motion view of the disk injection molding device having a dog-clutch opening guide means according to the present invention.

Fig. 5(I) shows a coupling state between the fixed guide ring 16 and the movable guide ring 19 in a die clamping position. In this state, the tapered guide surfaces 17 and 20, and the guide block 22 and the precise parallel groove 18 of the fixed guide ring 16, are simultaneously engaged with each other. Therefore, a center line 〈〈aa〉〉 of the fixed die assembly A and a center line 〈〈bb〉〉 of the movable die assembly B coincide with each other.

Fig. 5(II) shows a state in which the tapered guide surfaces 17 and 20 are held by the guide blocks 22, the center line 〈〈aa〉〉 of the fixed die assembly A and the center line 〈〈bb〉〉 of the movable die assembly B coincide with each other, and the die stroke is extremely short, S₁.

Fig. 5(III) shows a state at a moment when the die stroke exceeds S₂ and the guide block 22 of the movable die assembly B is detached from the precise parallel grooves 18 of the fixed guide ring 16. In this case, the center line 〈〈bb〉〉 of the movable die assembly B rapidly falls and shifts from the center line 〈〈aa〉〉 of the fixed die assembly A by the above-mentioned deflection amount δ.

As described above, the center line 〈〈aa〉〉 of the fixed die assembly A and the center line 〈〈bb〉〉 of the movable die assembly B can coincide with each other within a predetermined range at the beginning of die opening, thereby keeping the amount of shaft center displacement zero.

While the present invention has been described in detail in its preferred embodiment, many modifications and variations of the present invention are possible within the scope of the invention.

Although a pair of guide blocks are respectively located on the right and left sides of the movable guide ring in the embodiment, more than three pairs of guide blocks and precise parallel grooves may be located radially relative to the center of the fixed and movable guide rings, which can limit the horizontal and vertical shaft center displacement between the fixed die assembly A and the movable die assembly B.

A disk injection molding device having a die opening guide means according to the present invention is provided with a guide mechanism capable of moving a fixed die and a movable die in parallel to prevent the vertical shaft center displacement between the fixed die and the movable die caused in die opening after injection molding. Therefore, it is also possible to prevent the degradation resulting from the displacement and double transfer of fine signal bits transferred on a molded optical disk.

Furthermore, since both or one of the guide block and the guide groove are made of cemented carbide, sufficient durability and stability for wear resistance can be obtained even in a condition where lubricant cannot be used.

Since the guide mechanism achieved by the guide blocks and the guide grooves is incorporated in each guide ring, additional increase of die capacity is not needed, by which dies can be so designed as to be compact and light-weight.

Still furthermore, a disk injection molding device having a die opening guide means can be provided by improving only guide rings of a conventional molding device without special change of structure.

## Claims

1. A disk injection molding device with dog-clutch die opening guide means for moving dies horizontally, provided with fixed and movable die bases (1, 6), cylindrical disk cavitiy dies (2, 7) mounted in the center of said respective bases, and a pair of cylindrical guide rings (16, 19) concentrically located, as aligning guide means for said disk cavity dies (2, 7), on the outer periphery of said respective disk cavity dies and having male and female taper engaging surfaces (17, 20) in a shaft hole connecting portion at the leading ends thereof, said disk injection molding device comprising:
a plurality of grooves (18) formed in the axial direction to pierce between the inner periphery and the outer periphery from the leading end surface of said taper engaging surface on the outside cylindrical surface of one of said guide rings (16); and
a plurality of guide blocks (22) made of hard material to project from the leading end of the other guide ring (19) and to slidably and precisely engage with said plurality of parallel grooves (18) of said one guide ring (16),
wherein said cavity dies are concentrically held by a dog-clutch slidable coupling between said guide blocks (22) and said grooves in die opening.

2. A disk injection molding device according to claim 1, wherein said plural grooves (18) are formed at regular intervals at more than three positions on the outside cylindrical surface of said one guide ring (16).

3. A disk injection molding device according to claim 1 or 2, wherein said guide blocks (22) are formed by fixing guide blocks made of wear-resistant material, such as cemented carbide, into grooves (21) formed on said other guide ring (19) corresponding to said plurality of grooves (18) of said one guide ring (16) to project from the leading end surface of said other guide ring.

4. A disk injection molding device according to any of claims 1 to 3, wherein a plate member made of wear-resistant material, such as cemented carbide, is fixed onto both upper and lower surfaces of each of said grooves (18) to be engaged with the surfaces of each of said guide blocks (22) or all over said groove (18).

5. A disk injection molding device according to any of claims 1 to 4, wherein said guide grooves (18) and said guide blocks (22) are made of a cemented carbide having a rockwell hardness of HR of A83 to 89 and a transverse bending force of 200kgf/mm².

## Patentansprüche

1. Platten-Spritzgießvorrichtung mit Formöffnungs- Klauenkupplungs-Führungsmitteln zum horizontalen Bewegen der Formen, versehen mit festen und beweglichen Form-Grundplatten (1, 6), im Zentrum der jeweiligen Grundplatten befestigten zylindrischen Plattenhohlformen (2, 7) und einem Paar von zylindrischen Führungsringen (16, 19), die als Führungsmittel zum Ausrichten der Plattenhohlformen (2, 7) konzentrisch auf dem Außenumfang der entsprechenden Plattenhohlformen angeordnet sind und an ihren vorderen Enden in einem Achsen-Öffnungs-Verbindungsabschnitt schräge äußere und innere Eingriffsflächen (17, 20) aufweisen, wobei die Platten-Spritzgießvorrichtung folgende Merkmale aufweist:
eine Mehrzahl von Nuten (18), die in axialer Richtung ausgebildet sind, um sich zwischen dem Innenumfang und dem Außenumfang, ausgehend von der vorderen Stirnfläche der schrägen Eingriffsfläche, auf die zylindrische Außenfläche eines der Führungsringe (16) zu erstrecken; und
eine Mehrzahl von Führungsblöcken (22), die aus einem harten Material bestehen, um von dem vorderen Ende des anderen Führungsrings (19) abzustehen und verschiebbar und genau in die Mehrzahl von parallelen Nuten (18) des einen Führungsrings (16) einzugreifen,
wobei die Hohlformen von einer Klauenkupplung konzentrisch gehalten werden, die beim Öffnen der Form eine verschiebbare Kopplung zwischen den Führungsblöcken (22) und den Nuten bildet.

2. Platten-Spritzgießvorrichtung nach Anspruch 1, wobei die Nuten (18) in gleichmäßigen Abständen an mehr als drei Stellen auf der zylindrischen Außenfläche des einen Führungsrings (16) ausgebildet sind.

3. Platten-Spritzgießvorrichtung nach Anspruch 1 oder 2, wobei die Führungsblöcke (22) dadurch ausgebildet werden, daß Führungsblöcke aus einem verschleißfesten Material, wie z.B. Hartmetall, in Nuten (21) in dem anderen Führungsring (19) befestigt werden, die der Mehrzahl der Nuten (18) des einen Führungsrings (16) entsprechen , um von der vorderen Stirnfläche des anderen Führungsrings abzustehen.

4. Platten-Spritzgießvorrichtung nach einem der Ansprüche 1 bis 3, wobei ein Plattenelement aus verschleißfestem Material, wie beispielsweise Hartmetall, auf sowohl den oberen als auch den unteren Flächen der mit den Flächen jedes der Führungsblöcke (22) in Eingriff zu bringenden Nuten (18) oder auf allen Seiten der Nut (18) befestigt ist.

5. Platten-Spritzgießvorrichtung nach einem der Ansprüche 1 bis 3, wobei die Führungsnuten (18) und die Führungsblöcke (22) aus einem Hartmetall bestehen mit einer Rockwell-Härte HR von A83 bis 89 und eine Biegefestigkeit von 200kgf/mm².

## Revendications

1. Dispositif de moulage par injection à disques ayant un moyen de guidage d'ouverture de matrice à embrayage à griffes pour déplacer des matrices horizontalement, pourvu de supports fixe et mobile de matrices (1, 6), de matrices à cavité à disque cylindrique (2, 7) montées au centre des supports respectifs, et de deux anneaux cylindriques de guidage (16, 19) placés coaxialement, comme moyens de guidage d'alignement des matrices à cavité à disque (2, 7), sur la périphérie extérieure de celles-ci et ayant des surfaces coniques mâle et femelle de mise en prise (17, 20) dans une partie de jonction de trou d'arbre à leurs extrémités avant, ce dispositif de moulage par injection à disques comprenant :
plusieurs rainures (18) faites dans la direction axiale pour percer entre la périphérie intérieure et la périphérie extérieure depuis la surface d'extrémité avant de la surface conique de mise en prise sur la surface cylindrique extérieure d'un des anneaux de guidage (16), et
plusieurs blocs de guidage (22) faits de matière dure qui font saillie de l'extrémité avant de l'autre anneau de guidage (19) et viennent en prise par glissement et avec précision avec les rainures parallèles (18) du premier anneau de guidage (16),
dans lequel les matrices à cavité sont tenues coaxialement par un accouplement glissant à embrayage à griffes entre les blocs de guidage (22) et les rainures de l'ouverture de matrice.

2. Dispositif de moulage par injection à disques selon la revendication 1, dans lequel les rainures (18) sont faites à des intervalles réguliers à plus de trois endroits de la surface cylindrique extérieure du premier anneau de guidage (16).

3. Dispositif de moulage par injection à disques selon l'une des revendications 1 et 2, dans lequel les blocs de guidage (22) sont formés par fixation de blocs de guidage en matière résistant à l'usure, telle que carbure cémenté, dans des rainures (21) faites sur l'autre anneau de guidage (19) qui correspondent aux rainures (18) du premier anneau de guidage (16) pour faire saillie de la surface d'extrémité avant de l'autre anneau de guidage.

4. Dispositif de moulage par injection à disques selon l'une des revendications 1 à 3, dans lequel une plaque faite de matière résistant à l'usure, telle que carbure cémenté, est fixée sur la surface supérieure et la surface inférieure de chacune des rainures (18) pour être mise en prise avec les surfaces de chacun des blocs de guidage (22) ou sur toute la rainure (18).

5. Dispositif de moulage par injection à disques selon l'une des revendications 1 à 4, dans lequel les rainures de guidage (18) et les blocs de guidage (22) sont faits d'un carbure cémenté ayant une dureté Rockwell HR de A83 à 89 et une force de flexion transversale de 200 kgf/mm².
